# EUROPEAN PATENT SPECIFICATION

(11) **EP 2 999 053 B1**
(45) Date of publication and mention of the grant of the patent: **08.11.2017**
(21) Application number: 14306458.2
(22) Date of filing: 22.09.2014
(51) Int. Cl.: H01R 4/36, F16B 31/02

(54) **Wire connection assembly with telescopic binding screw**
Drahtverbindungsanordnung mit teleskopischer Klemmschraube
Ensemble de connexion de fil avec vis de liaison télescopique

(43) Date of publication of application: 23.03.2016
(73) Proprietor: Tyco Electronics Simel S.A.S., 21220 Gevrey-Chambertin (FR)
(72) Inventor: Peltier, Bruno, 21850 St. Apollinaire (FR)
(74) Representative: Grünecker Patent- und Rechtsanwälte PartG mbB

(56) References cited:
- EP-A2- 1 833 117
- GB-A- 2 443 001
- US-A1- 2008 101 886

## Description

The present invention relates to a wire connection assembly, such as a splice connector or a lug, especially for connecting flexible aluminum wires, the assembly comprising a binding screw having an inner bolt with an outer thread and having an outer bolt with an inner thread adapted to engage the outer thread and with a threaded section adapted to engage a threaded hole in a connector body at least partially forming a wire receiving chamber extending essentially perpendicularly to a central axis of the binding screw, wherein the inner bolt is provided with at least one predefined inner breaking point and that the outer bolt is provided with at least one predefined outer breaking point.

Connection assemblies comprising binding screws of the type mentioned above are known from the prior art. The connection assemblies may be used for splicing or connecting e.g. stranded wires in power distribution networks or long distance transmission systems for distributing electrical power. The wire connection assemblies generally comprise a connector body providing at least one receiving chamber, into which a wire or e.g. a stranded end section thereof can be inserted. The at least one binding screw is then inserted into a bore which may be formed as a through hole or may provide access to the threaded hole from outside of the connector body and extends essentially perpendicularly to the wire. When the screw is then turned so that it enters the receiving chamber through the bore, the wire is compressed between the screw and the walls of the receiving chamber such that the wire is at least clamped in the receiving chamber and additionally an electrical contact is established between the screw and/or the inner walls of the receiving chamber and the wire.

Due to weight and/or cost reduction requirements, especially for electrical powered distribution, more and more stranded aluminum wires are used instead of the previously used copper wires. However, stranded aluminum wires are more prone to damage than copper wires when clamped by the binding screws especially in that due to the turning movement of the screw, the aluminum wires or strands thereof may break and rip apart. Further, aluminum has the tendency to be covered by an aluminum oxide layer when exposed to air. The oxide layer has to be penetrated at least by the screw in order to establish a proper electrical contact between the screw and the wire.

In document GB 2 443 001 A, a telescopic school is described, which comprises a hollow cylindrical main body and a contact bolt which is threaded such that it can be driven out of the cylindrical main body for contacting electrical wires.

In view of the challenges when using wire connection assemblies especially in connection with stranded aluminum wires as explained above, an object of the present invention is to provide binding screws which are well adaptable to the wire to be connected, in particular provide a good electrical contact and, at the same time, decrease the risk of damaging a stranded wire.

For the wire connection assembly mentioned at the beginning of the description, the object is solved in that the outer breaking point is located in an inner gap dividing the inner thread into an upper inner thread portion and a lower inner thread portion.

This solution has the decisive advantage over the prior art that an insertion depth of the binding screw into the receiving chamber may be freely chosen while the screw may be designed as required for a certain application e.g. by providing the binding screw with a relatively long tip for establishing good electrical contact with a wire. At the same time, the wire connection assembly comprising the screw and the connector body may be delivered in a pre-assembled state, where the screw is at least partly screwed into the connector body so that they are captively held together while arranged as required in relation to the receiving chamber. Providing both the inner bolt and the outer bolt with a breaking point allows for choosing driving and breaking torques of the screw as required by a certain application. At least the thread portion may be standardized and/or well established so that the screw may be applied to standardized and/or well established connector bodies.

The solution according to the invention can be combined as desired and further improved by the following further embodiments, which are advantageous on their own in each case:

According to a first further embodiment of a wire connection assembly according to the present invention, a distance between a lower end of the outer thread and a lower end or tip of the inner bolt measured essentially in parallel to the central axis may not exceed a distance between an upper end of the inner thread and a lower end or rim of the outer bolt measured essentially in parallel to the central axis. The central axis may run essentially in parallel to an insertion direction for inserting the screw into the connector body and/or essentially perpendicularly to a longitudinal direction of the wire.

In the preassembled state, the lower end of the inner bolt and if desired also the lower end of the outer bolt may be located outside of the chamber, e.g. when a lowest thread helix of the inner bolt engages an uppermost thread helix of the outer bolt, so that the wire may be easily introduced into the chamber without the wire or at least some of its strands being kinked or stopped at the screw during introduction of the wire. Therefore, it is helpful that a distance between the outer thread and a tip of the inner bolt measured essentially in parallel to the central axis may exceed a distance between the inner thread and a rim of the outer bolt measured essentially in parallel to the central axis and/or the length of a guiding section of the outer bolt arranged below the inner thread. The guiding section may be arranged between an upper end of the inner thread and a lower end of the outer bolt and may serve for guiding a shaft section of the inner bolt arranged between the inner thread and the tip of the inner bolt.

The tip may form the lower end of the inner bolt while the rim may form the lower end of the outer bolt. Thereby, in a fully engaged state, the inner breaking point may be located above the outer breaking point in a height direction of the assembly, so that the outer breaking point does not provide edges which protrude above the inner bolt and/or the connector body in a way that they could lead to damage or injury when providing e.g. an insulation layer around the connector body and handling the connector body, respectively. In other words, in a fully engaged state, the inner breaking point may be located above the outer breaking point in the height direction, i.e. in front of the outer breaking point in the insertion direction. Further, in the fully engaged state, the lower end of the inner bolt may jut underneath the lower end of the outer bolt, i.e. the tip may reach underneath the rim so that the inner bolt protrudes from the outer bolt in the insertion direction.

A stop for the inner bolt may be formed at the outer bolt. Thereby, e.g. the fully engaged state may be defined. The stop may be formed at the inner thread and/or the outer thread. For example, a stop of the inner bolt may be provided by the lower end of the outer thread. A stop at the outer bolt may be provided at a lower end of the inner thread.

The inner thread and the outer thread may essentially have the same length measured in parallel to the central axis. Thereby, a full insertion of the inner bolt into the outer bolt may be signalized in that the upper end of the outer thread and the upper end of the inner thread may be located essentially at the same height in the insertion direction when reaching the fully engaged state. However, in the fully engaged state, the inner breaking point and the outer breaking point may be located as desired along the central axis while above and/or below the inner breaking point and the outer breaking point, the outer thread and the inner thread are in engagement with each other.

A first torque, e.g. a pre-assembly torque, between the inner thread and the outer thread may be lower than a second torque, e.g. an insertion torque, between the threaded section and the threaded hole. Therefore, the inner and outer thread may be finer and/or less steep than the threaded section. This may also help in minimizing the wall thickness of the outer bolt. It may be assured that first a fully engaged state is achieved by fully inserting the inner bolt into the outer bolt and only afterwards the outer bolt is driven in order to transfer the screw into a final state. Also, a maximal insertion torque for breaking the inner breaking point may exceed a breaking torque for breaking the outer breaking point in order to break the inner bolt and the outer bolt in a defined sequence so that they first reach a fully inserted state and then the final state.

The lower inner thread portion may be a first inner thread portion and the upper inner thread portion may be a second inner thread portion. Thereby, the forming of edges at the outer breaking point may be prevented because the thread is not broken upon shearing but upon exceeding the ultimate tensile strength of the outer breaking point.

The outer breaking point may be located in the vicinity of a lower end of the inner gap. Thereby, the inner breaking point may be moved along the inner gap with a certain tolerance while assuring that the outer breaking point always lies below the inner breaking point at least in the final state.

The inner breaking point may be located in an outer gap dividing the outer thread into an upper outer thread portion and a lower outer thread portion. The lower outer thread portion may be a first outer thread portion the upper outer thread portion may be a second outer thread portion. Thereby, also the formation of edges at the inner breaking point may be prevented.

A length of the inner gap measured essentially in parallel to the central axis may exceed a length of the outer gap measured essentially in parallel to the central axis. Thereby, it may be provided that the upper outer thread portion is well engaged with the upper inner thread portion in any position along the insertion direction when the outer gap and the inner gap overlap.

A length of the lower outer thread portion measured essentially in parallel to the central axis may exceed a length of the lower inner thread portion measured essentially in parallel to the central axis. Thereby it can be assured, that at least in the final state, the outer breaking point is located below the inner breaking point. Further, a part of the outer thread remains accessible which may allow for removing the binding screw from the connector body after reaching the final state.

The inner bolt and the outer bolt together may form at least a part of a contact section of the binding screw. Hence, both the inner and the outer bolt may be used for establishing an electrical contact with the wire and/or for clamping the wire.

A tapered penetration portion of the binding screw may be at least partially formed by the inner bolt and/or the outer bolt. For example, the inner bolt may provide a first conical section and the outer bolt may provide a second conical section of the penetration portion. Thereby, the screw may penetrate the wire preferably without damaging the wire and still cutting through any oxide layer.

The binding screw may further comprise a driving section. The through-hole or bore may be internally threaded and open into the wire receiving chamber. For the binding screw, the object may then alternatively and/or additionally be solved in that the contact section has a tapered penetration portion, wherein a length of the tapered penetration portion is at least as large as ¾ of a diameter of the binding screw in the threaded section.

The binding screw according to the invention thus provides a contact section which is capable of penetrating into a stranded wire during insertion of the screw into a connector body. Instead of pressing the strands along an insertion direction, the binding screw penetrates the stranded wire so that the strands are displaced by the tapered penetration portion mostly perpendicular to the insertion direction. Therefore, the risk of damaging the strands is reduced. Further, since the length of the tapered penetration portion is at least as large as ¾ of the diameter of the binding screw in the threaded section, the binding screw provides a contact section with a large contact area between the binding screw and the wires. The displacement of the wires leads to a movement of most of the single strands and therefore to friction between neighboring strands. An aluminum oxide layer on the strands can be removed or at least weakened by this movement. Another advantage of the binding screw according to the invention is that a stranded wire can be securely fixated by the binding screw since the tapered penetration portion penetrates into the stranded wire and therefore establishes a positive fit between the binding screw and the stranded wire. The invention is especially advantageous for flexible conductors according to IEC 60228 class 5.

For a wire connection assembly, the object of the present invention may then alternatively and/or additionally be solved in that the at least one binding screw of the assembly is formed as mentioned above according to the present invention.

In the following, alternative and/or additional further improvements of the invention are described. These improvements may be combined independently of each other, depending on whether a particular advantage of a particular improvement is needed in a specific application.

According to a first alternative and/or additional advantageous improvement, the length of the tapered penetration portion may be at least as large as the diameter of the screw in the threaded section. This improvement can lead to a very sharp pointed tapered penetration portion with a large contact area between the binding screw and the strands. Further, this proportion can improve the displacement of strands by the tapered penetration portion.

The tapered penetration portion can be formed in such a way, that an angle between a surface line of the tapered penetration portion and a line perpendicular to the central axis is larger than an angle of friction of the strands in contact with the tapered penetration portion. This improvement can lead to an easy displacement of the strands by the binding screw.

In order to provide a contact section which can easily be formed on a binding screw, the tapered penetration portion can have a first conical section with an angle between a surface line of the first conical section and the central axis being less than 30°.

In order to provide a conical section which leads to a long tapered penetration portion, the angle can be less than 25°, most preferably 22°.

In an alternative embodiment, the tapered penetration portion can have a curved shape in a cross-section parallel to the central axis.

An embodiment of the binding screw wherein the tapered penetration portion has a first conical section can further be improved in that the tapered penetration portion has a second conical section which is arranged between the first conical section and the threaded section. The second conical section preferably has an angle between a surface line of the second conical section and the central axis being larger than the angle between a surface line of the first conical section and the central axis. This design allows the positioning of the threaded section closer to a tip of the contact section compared to a design in which the first conical section extends until the immediate vicinity of the threaded section. A design in which the threaded section is close to the tip of the tapered penetration portion can be advantageous when it is desired to preinstall binding screws in a connector body before a stranded wire is inserted into the connector body. During insertion of a stranded wire, it is desired to be able to insert the stranded wire unhindered by elements in a wire receiving chamber. The second conical section as mentioned above, allows the screw to be pre-inserted in a bore of a connector body without the contact section of the screw entering too far into the wire receiving chamber.

In an alternative embodiment, in which the tapered penetration portion has a curved shape, the same result as described above can be achieved, when the curvature in the vicinity of the threaded section is bent away from the central line of the binding screw, so that a section is formed in which an angle between a surface line and the central axis is larger than an angle between a surface line and the central axis in the remaining tapered penetration portion.

According to another advantageous improvement of the binding screw, the binding screw can be formed as a shear bolt with a shear element between the driving section and the threaded section. The shear element allows the driving section to break away when a required minimum moment of force is applied on the driving section of the binding screw. The dimension of the shear element can be chosen in order to adjust the moment of force at which the driving section is removed from the screw. Removing the driving section by this shearing feature can be advantageous, when it is desired to protect an inserted binding screw from being removed after the stranded wire was fixated. Further, removing the parts of the screw, which might extend out of a connector body after insertion of the screw can be helpful when it is intended to apply insulation means around the connector body after a stranded wire has been fixated in it.

The shear element can have a third conical section with a lower diameter end facing towards the threaded section and a cylindrical section between said conical section and the threaded section. In this case, the cylindrical section will be a pre-determined breaking point. The definition of a breaking point is helpful for defining the dimensions of the part of the binding screw which will remain in the connector body.

The wire connection assembly according to the invention can further be improved in that the length of the tapered penetration portion is at least as large as 2/3 of an inner diameter of the wire receiving chamber. This allows the tapered penetration portion to penetrate deeply into an inserted stranded wire and to displace a large portion of the single strands inside the wire receiving chamber.

The length of the tapered penetration portion is preferably at least as large as ¾ of the inner diameter of the wire receiving chamber. This can allow the binding screw to penetrate with its tapered penetration portion through the whole or at least through most of the stranded wire and displace all or most of the single strands so that they are arranged between the contact section and inner walls of the wire receiving chamber. Preferably, the strands are arranged in an area which is bordered by a tapered penetration portion and inner walls of the wire receiving chamber. In a preferred embodiment, the threaded section does not enter the wire receiving chamber in order to avoid damages to the strands from the threads.

In an inserted position of the at least one binding screw, the binding screw may extend over at least ¾ of the diameter of the wire receiving chamber into the same. More preferably, the binding screw extends over 100% of the diameter of the wire receiving chamber into the same. This means, that the end of the tapered penetration portion which points in the insertion direction is aligned with an inner wall of the wire receiving chamber in a cross section in parallel with the central axis of the screw. This deep penetration of the binding screw into the wire receiving chamber allows the contact section to displace most of the strands during insertion and therefore to remove as much of the aluminum oxide layers from the strands as possible. Further, the deep penetration of the binding screw into the stranded wire leads to a good fixation of the stranded wire in the wire receiving chamber.

In order to insert the binding screw even deeper into the wire receiving chamber as described above, an extension opening for receiving the tapered penetration portion at least in parts can be arranged in an inner wall of the wire receiving chamber opposite to the bore of said binding screw. Such deep penetration of the binding screw can be helpful when a stranded wire is inserted that is having a smaller cross section compared to a stranded wire which can be connected with the wire connection assembly without the extension opening. Even with a stranded wire with a small cross section, the binding screw can still displace the strands and press them against inner walls of the wire receiving chamber because the binding screw can penetrate into the wire receiving chamber further than the inner wall opposite to the bore. With this advantageous feature, the same wire connection assembly can be used for a variety of wire sizes. Furthermore, there is no need for inserts which can be placed inside the wire receiving chamber when a stranded wire with a small cross section is to be connected.

In order to avoid air and debris to get through the extension opening into the wire receiving chamber, the extension opening can be formed as a blind hole. Since the extension opening is arranged in the inner wall of the wire receiving chamber, the blind hole extends from the inner wall of the wire receiving chamber into the connector body along a central axis of the binding screw bore.

The inner diameter of the wire receiving chamber may be larger than the bore. This is advantageous in order to provide space for the strands to be displaced by the binding screw.

In order to improve the electrical contact between the contact section of the binding screw and the strands, a reducing agent may be provided on a surface of the contact section of the binding screw. The reducing agent is then automatically applied on the strands during insertion of the binding screw. Upon displacement of the strands, the reducing agent may also enter between the single strands and therefore reduce oxide layers on the strands in the wire receiving chamber.

The invention will be described in more detail by way of examples hereinafter using advantageous embodiments and with reference to the accompanying drawings. The described embodiments are only possible configurations in which individual features may, however, as described above, be implemented independently of each other or may be omitted. Equal elements illustrated in the drawings are commonly provided with equal reference signs and/or at least reference signs having the same decimal and/or unit position. Redundant parts of the description relating to equal elements illustrated in the drawings are left out.

In the drawings:
- Fig. 1: shows a schematic partly cross-sectioned perspective view of a wire connection assembly according to an embodiment of the present invention in a pre-assemble state;
- Fig. 2: shows a schematic partly cross-sectioned perspective view of the wire assembly shown in Fig. 1 in a fully engaged state;
- Fig. 3: shows a schematic partly cross-sectioned view of the wire assembly shown in Figs. 1 and 2 in a fully inserted state;
- Fig. 4: shows a schematic partly cross-sectioned view of the wire connection assembly shown in Figs. 1 to 3 in a first breaking state;
- Fig. 5: shows a schematic partly cross-sectioned view of the wire connection assembly shown in Figs. 1 to 4 in a final state; and
- Fig. 6: shows a schematic diagram of a tightening sequence of the wire connection assembly shown in Figs. 1 to 5 when transferred from the pre-assembly state into the final state.

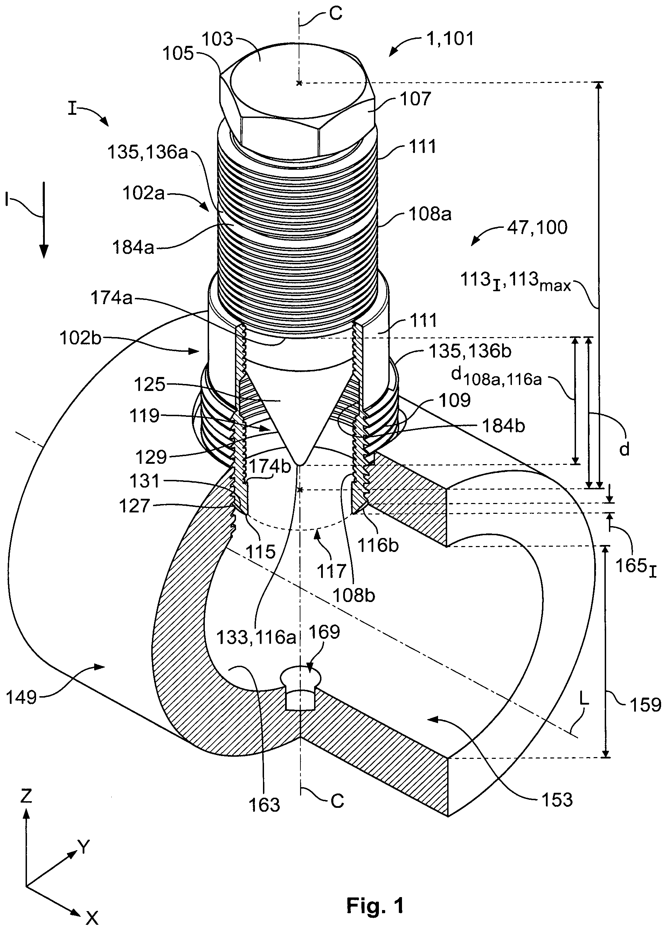

An exemplary embodiment of a wire connection assembly 47, 100 with a binding screw 101 according to an embodiment of the present invention is first described in the following with reference to Fig. 1, which shows a schematic partly cross-sectioned perspective view of the wire connection assembly 100 and the binding screw 101 in a pre-assembled state I. The wire connection assembly 100 may extend along a longitudinal direction X, transverse direction Y and height direction Z, which run perpendicularly to each other and thus form a Cartesian coordinate system. Henceforth, commonly any mention of in front or behind may relate to the longitudinal direction X, every mention of left and right may relate to the transverse direction Y, and every mention of above and below or rear and front, respectively, may refer to the height direction Z.

The binding screw 101 may comprise an inner bolt 102a which can be inserted into an outer bolt 102b, e.g. in the form of a sleeve or bushing, of the binding screw 101. For driving the binding screw 101, at an upper end or rear end 103 thereof, a driving section 105 is provided, e.g. formed at the inner bolt 102a, which may comprise at least one driving element 107 allowing for applying a torque M to the binding screw 101 around the central axis C thereof. The driving element 107 may be formed and arranged such that it allows positive fit with a counter driving element of a driving tool (not illustrated). The inner bolt 102a is provided with an outer thread 108a which allows for screwing the inner bolt 102a into an inner thread 108b of the outer bolt 102b. A threaded section 109 is provided at the outer circumference of the outer body 102b for inserting the entire binding screw 101 in the insertion direction I. A body section 111 of the binding screw 101 is at least in parts formed at the outer bolt 102b above the threaded section 109 as an unthreaded outer circumference.

A total length 113, in particular a total length 113_{I} in the pre-assembled state I of the binding screw 101 shown in Fig. 1 is a maximal total length 113ₘₐₓ measured between the upper end 103 and a front end or lower end 115 of the binding screw 101 in the pre-assembled state I. For achieving the maximal total length 113ₘₐₓ, the lowest thread helix of the outer thread 108a just engages the upper most thread helix of the inner thread 108b. Thereby, a tip 116a of the inner bolt 102a is located upwards, i.e. behind a rim 116b formed at the outer bolt 102b. In other words, a distance between a lower end of the outer thread 108a and a lower end of the inner bolt 102a measured essentially in parallel to the central axis C does not exceed a distance between an upper end of the inner thread 108b and a lower end of the outer bolt 102b measured essentially in parallel to the central axis C.

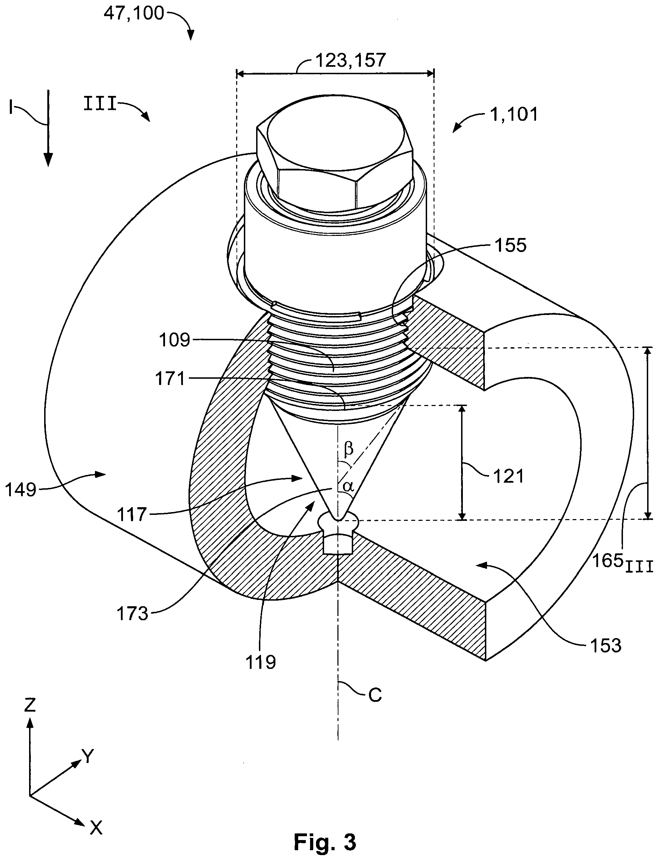

A contact section 117 for contacting a wire (not shown) is provided in the region of the lower end 115. For example, the contact section 117 may be formed as or comprising a tapered penetration portion 119 which is adapted to pierce through the wire without damaging the strands thereof, yet break open any oxide layer thereon. The penetrating characteristics of the penetration portion 119 may be optimized by adapting a length 121 of the penetration portion 119 to a diameter 123 of the binding screw 101, in particular of the penetration portion 119 (see Fig. 3). The penetration portion 119 may constitute or at least may comprise a first conical section 125 formed at the inner bolt 102a and a second conical section 127 which may in particular be a frustoconical section formed at the outer bolt 102b. A surface line 129 of the first conical section 125 and a surface line 131 of the second conical section may be adapted in order to provide desired angles α and β, respectively for penetrating the wire (see Fig. 3). Accordingly, a tip or pointed end 133 of the binding screw 101 may be provided at the penetration portion 119.

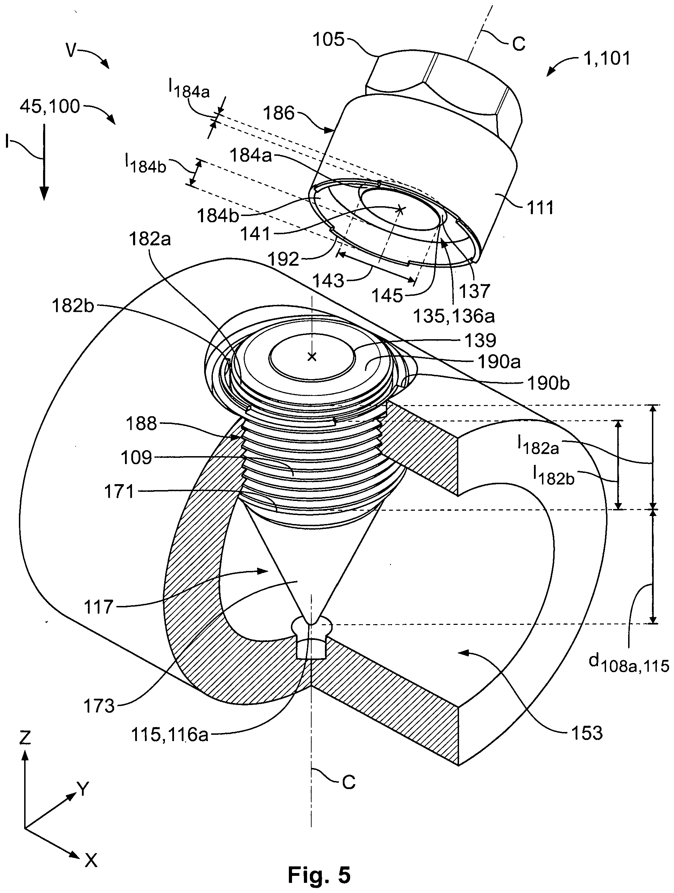

A shear element 135 may be formed at the binding screw 101 comprising a first or inner breaking point 136a formed at the inner bolt 102a and a second or outer breaking point 136b formed at the outer bolt 102b. The shear element 135 may be formed with the help of at least one third conical section 137 (see Fig. 5). Further, the shear element 135 may comprise a cylindrical section 139 into which the third conical section 137 may yield and thus define a lower diameter end 141, in particular at the inner bolt 102a, in order to define the inner breaking point 136a. At the lower diameter end 141, a diameter 143 of the shear element 135 may be the smallest diameter of the shear element in order to allow for precisely defining the breaking point 136a along the central axis C, in particular along a surface line 145 of the third conical section 137 (see Fig. 5). In Fig. 1, furthermore a connector body 149 of the wire connection assembly 100 is shown which provides a wire receiving chamber 153 for receiving a stranded wire (not shown). The wire receiving chamber 153 extends essentially along a longitudinal axis L of the connector body 149 running essentially in parallel to the longitudinal direction X. A bore or threaded hole 155 may extend essentially perpendicularly to the longitudinal axis L from the outside of the connector body 149 into the wire receiving chamber 153, e.g. essentially in parallel to the height direction Z. A bore diameter 157 (see Fig. 3) may be chosen according to an inner diameter or height 159 of the wire receiving chamber 153. A length of the binding screw 101 jutting below or above an inner wall 163 of the wire receiving chamber 153 may be regarded as a penetration depth 165, in particular a penetration depth 165_{I} in the pre-assembled state I, with which the binding screw 101, in particular the penetrating portion 119 thereof, protrudes in to the wire receiving chamber 153 and a wire located therein. In order to maximize the penetration, on a side opposing the threaded hole 155, the inner wall 163 is provided with an extension opening 169. The extension opening 169 may enable for example, to position a rear end 171 of the contact section 117 fully within the receiving chamber 153 so that an entire surface 173 of the penetration portion 119 may be positioned within the wire receiving chamber 153 (see Fig. 5).

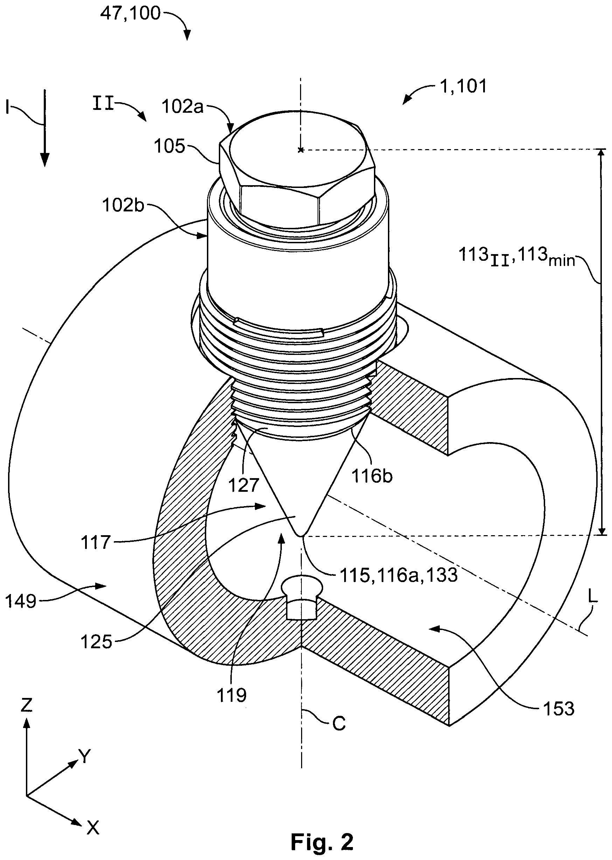

Fig. 2 shows the wire connection assembly 47, 100 in a schematic partly cross-sectioned perspective view in a fully engaged state II, wherein the inner bolt 102a is fully inserted into the outer bolt 102b. In the fully engaged state II, a stop 174a formed at the inner bolt 102a may abut a stop 174b formed at the outer bolt 102b in order to limit a movement of the inner bolt 102a with respect to the outer bolt 102b in the insertion direction I. In particular, the stop 174a may be formed at a lower end of the outer thread 108a. Accordingly, the stop 174b may be formed at a lower end of the inner thread 108b (see Figs. 1 and 3). The driving section 105 is still accessible as it juts above the outer bolt 102b, so that a torque may be applied to the driving section 105 such that the inner bolt 102a and the outer bolt 102b in the fully engaged state II may be turned in conjunction in order to insert the entire binding screw 101 into the receiving chamber 153 along the insertion direction I.

Further, it becomes apparent in Fig. 2 that in the fully engaged state II, the binding screw 101 has a total length 113_{II} which is a minimal total length 113ₘᵢₙ measured essentially in parallel to the central axis C. The lower end 115 of the binding screw 101 is now defined by the tip 116a of the inner bolt 102a which may provide the pointed end 133 of the penetrating portion 119. The first conical section 125 may now be yielded into the second conical section 127 such that in combination they form the penetration portion 119.

Fig. 3 shows the wire connection assembly 47, 100 in a schematic partly cross-sectioned perspective view in a fully inserted state III. In the fully inserted state III, the binding screw 101 may have reached a desired penetration depth 165_{III}. The penetration depth 165_{III} in the fully inserted state III may be chosen such that the rear end 171 of the contact section 117 and/or if desired, the surface 173 of the penetration portion 119 is fully inserted into the receiving chamber 153. The threaded section 109 should be designed such that it is still in full engagement with the threaded hole 155, i.e. an inner threading provided at the inner circumference thereof.

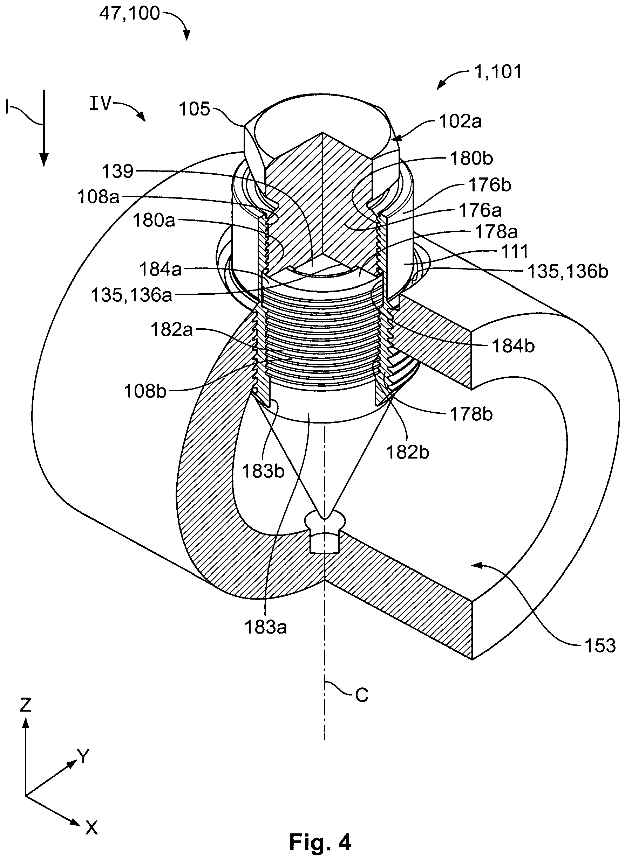

Fig. 4 shows a schematic partly cross-sectioned perspective view of the connection assembly 47, 100 in a first breaking state IV. The first breaking state IV may be reached when a dragging torque applied to the driving section 105 after reaching the fully inserted state III exceeds a shearing torque of the shear element 135, in particular the inner breaking point 136a. The inner bolt 102a is thereby divided into an upper part 176a and a lower part 178a. The outer thread 108a is divided into an upper outer thread portion 180a and a lower outer thread portion 182a. The upper outer thread portion 180a may be separated from the lower outer thread portion 182a already before shearing the inner bolt 102a at the predefined inner breaking point 136a in that a gap 184a is formed in the outer thread 108a (see Fig. 1).

A gap 184b (see also Fig. 1) may also be provided in the inner thread 108b so that the inner thread 108b is divided into an upper inner thread portion 180b and a lower inner thread portion 182b. The shear element 135, in particular the predefined outer breaking point 136b may be positioned in the gap 184b of the outer bolt 102b. Hence, the outer bolt 102b can be divided at the shear element, in particular the predefined outer breaking point 136b into an upper part 176b and a lower part 178b to which the upper inner thread portion 180b and the lower inner thread portion 182b are associated, respectively. Further, a shaft section 183a of the inner bolt 102a is provided below the outer thread 108a and positioned already in the fully engaged state I at the same height as a guiding section 183b formed by an inner circumference of the outer bolt 102b so that the inner bolt 102a is guided and thus stabilized within the outer bolt 102b.

Fig. 5 shows the connection assembly 47, 100 in a schematic partly cross-sectioned perspective view in a second breaking state which may be a final state V. For transferring the binding screw 101 from the first breaking state IV into the final state V, the upper part 176a of the inner bolt 102a has been turned with respect to the lower part 178a so far that a pressure between the lower diameter end 141 and the cylindrical section 139, in particular the top thereof is generated and transferred via the upper outer thread portion 180a engaging the upper inner thread portion 180b in a way that it is converted to tensile stress acting between the upper part 176b of the outer bolt and the lower part 178b of the outer bolt 102b. When this tensile stress exceeds the longitudinal strength or ultimate tensile strength of the shear element 135, in particular of the predefined outer breaking point 136b, the outer bolt 102b is separated into the upper part 176b and the lower part 178b. Hence, the entire binding screw 101 in the final state V is divided into an upper part 186 and a lower part 188. The upper part 186 may comprise the driving section 105 and the driving section 111. The lower part 188 may comprise the threaded section 109 and the contact section 117.

In Fig. 5 it further becomes apparent that a length l_{184b} of the inner gap 184b measured essentially in parallel to the central axis C exceeds a length l of the outer gap 184a measured essentially in parallel to the central axis C. The lengths l₁₈₄ₐ may equal a height of the third conical section 137. In the fully engaged state II and hence also later in the final state V, the outer breaking point 136b may thereby be located below the inner breaking point 136a so that a top end 190a of the inner bolt 102a is arranged above a top end 190b of the outer bolt 102b whereby it may be prevented that any sharp edges of the outer bolt 190b protrude beyond the top end 190a of the inner bolt and thus may damage any insulation applied to the connection assembly 47, 100 or may cause injury while handling the connection assembly 47, 100.

In Fig. 5 it further becomes apparent that a length l₁₈₂ₐ of the lower outer thread portion measured essentially in parallel to the central axis C may exceed a length l_{182b} of the lower inner thread portion 182b measured essentially in parallel to the central axis. The shear element 135, in particular the predefined outer breaking point 136b may be designed such that it comprises a number of shear zones 192 formed as material, bridges with cutouts therebetween for connecting the upper part 176b of the outer bolt 102b to the lower part 178b of the outer bolt 102b. The shear zones 192 may be evenly distributed around the central axis C. For example, three shear zones may be provided which each extends along an angle of between 50° and 70°, e.g. 60° around the central axis C.

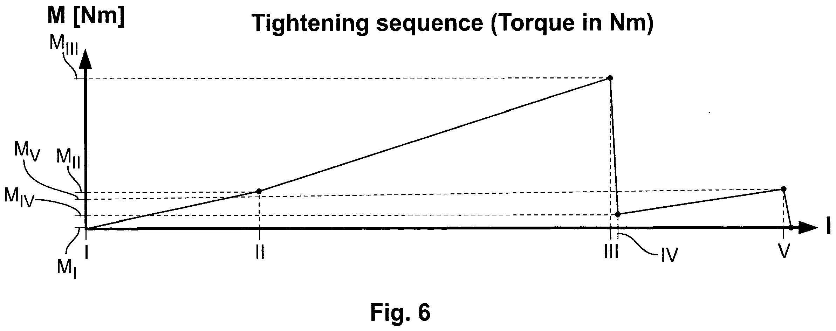

Fig. 6 shows a tightening sequence for applying a torque M to the driving section 105 of a binding screw 101 according to an embodiment of the present invention such that it is transferred from the pre-assembled state I into the final state V as described in relation to Figs. 1 to 5, respectively, above. For inserting the inner bolt 102a outer bolt 102b in order to transfer the inner bolt 102a and the outer bolt 102b, separated into the pre-assembled state I, a pre-assembling torque M_{I} is to be applied. For transferring the inner bolt 102a and the outer bolt 102b from the pre-assembled state I into the fully engaged state II, a engaging torque M_{II} is to be applied which exceeds the pre-assembly torque M_{I}. For transferring the binding screw 101 from the fully engaged state into the fully inserted state III, an insertion torque M_{III} is to be applied which is significantly higher than the engaging torque M_{II} until the first predefined breaking point 136a is sheared and thereby the binding screw 101 is transferred from the first breaking state IV, where a first broken torque M_{IV} remains which is significantly lower than the insertion torque M_{III} and may be even lower than the engaging torque M_{II}. For then transferring the binding screw 101 from the first breaking state IV into the final state V, a second breaking torque M_{V} is to be applied which exceeds the first breaking torque M_{IV} and may be lower than the engaging torque M_{II}.

Deviations from the above-described embodiment of a connection assembly 47, 100 and a binding screw 1, 101 are possible within the scope of the present invention without departing from the inventive idea. The wire connection assembly 47, 100 may comprise as many binding screws 1, 100 as desired for a respective application. The wire connection assembly 47, 100 and/or the binding screw 1, 101 may be used for clamping and/or connecting any kind of wire, e.g. copper wires, aluminum wires, wires made of any kind of metal or metal alloys, etc. and are especially advantageous for use with stranded aluminum wires.

The binding screw 1, 101 may be provided with an inner bolt 102a and an inner bolt 102a and an outer bolt 102b having upper ends/rear ends 103, driving sections 105, driving elements 107, outer threads 108a, inner threads 108b, threaded sections 109, body sections 111, total length 113, lower ends/front ends 115, tips 116a, rims 116b, contact sections 117, penetration portions 119, length 121 of penetration portions 119, diameters 123, first conical sections 125, second conical sections 127, surface lines 129, surface lines 131, tips/pointed ends 133, shear elements 135, predefined first/inner breaking points 136a, predefined second/outer breaking points 136b, third conical sections 177, cylindrical sections 139, lower diameter ends 141, diameters 143, surface lines 145, rear ends 171 of contact sections 117, surfaces 173 of penetration portions 119, stops 174a, 174b, upper parts 176a, 176b, lower parts 178a, 178b, upper outer thread portions 180a, upper inner thread portions 180b, lower outer thread portions 182a, lower inner thread portions 182b, shaft sections 183a, guiding sections 183b, gaps 184a, 184b, upper parts 186, lower parts 188, top ends 190a, 190b and/or shear zones 192 in whatever number and form is required for achieving a desired penetration depth 165 and torques M_{I} to M_{V} between states I to V.

Accordingly, the connector body 149 may be provided with wire receiving chambers 153, bores through holes 155, bore diameters 157, inner diameters/heights 159, inner walls 163 and extension openings 169 in whatever number and form is required for achieving the desired penetration depth 165 as well as clamping and/or contacting effect between the wire connection assembly 47, 100 and a wire.

### Reference Signs

- 47, 100: wire connection assembly
- 101: binding screw
- 102a: inner bolt
- 102b: outer bolt
- 103: upper end/rear end
- 105: driving section
- 107: driving element
- 108a: outer thread
- 108b: inner thread
- 109: threaded section
- 111: body section
- 113: total length
- 115: lower end/front end
- 116a: tip
- 116b: rim
- 117: contact section
- 119: penetration portion
- 121: length of the tapered penetration portion
- 123: diameter of binding screw
- 125: first conical section
- 127: second conical section
- 129: surface line
- 131: surface line
- 133: tip/pointed end
- 135: shear element
- 136a: first inner breaking point
- 136b: second outer breaking point
- 137: third conical section
- 139: cylindrical section
- 141: lower diameter end
- 143: diameter
- 145: surface line
- 149: connector body
- 153: wire receiving channel
- 155: bore/threaded hole
- 157: bore diameter
- 159: inner diameter/height
- 163: inner wall
- 165: penetration depth
- 169: exterior opening
- 171: rear end of contact section
- 173: surface of the penetration portion
- 174a: stop at inner bolt
- 174b: stop at outer bolt
- 176a: upper part inner bolt
- 176b: upper part outer bolt
- 178a: lower part inner bolt
- 178b: lower part outer bolt
- 180a: upper outer thread portion
- 180b: upper inner thread portion
- 182a: lower outer thread portion
- 182b: lower inner thread portion
- 183a: shaft section
- 183b: guiding section
- 184a: gap in outer thread
- 184b: gap in inner thread
- 186: upper part
- 188: lower part
- 190a: top end of inner bolt
- 190b: top end of outer bolt
- 192: shear zone

- d_{108a, 116a}: distance between outer thread and tip of inner bolt
- d_{108b, 116b}: distance between upper end of inner thread and rim of outer bolt

- M_{I}: pre-assembly torque
- M_{II}: engaging torque
- M_{III}: insertion torque
- M_{IV}: first breaking torque
- M_{V}: second breaking torque
- l₁₈₄ₐ: length of outer gap
- l_{184b}: length of inner gap

- max: maximum
- min: minimum

- I: pre-assembled state
- II: fully engaged state
- III: fully inserted state
- IV: first breaking state
- V: final state/second breaking state

- C: central axis
- I: insertion direction
- α: angle
- β: angle
- γ: angle
- L: longitudinal axis
- M: torque
- X: longitudinal direction
- Y: transverse direction
- Z: height direction

## Claims

1. Wire connection assembly (47, 100), such as a splice connector or lug, especially for connecting flexible aluminum wires, the assembly (47, 100) comprising a binding screw (1, 101) having an inner bolt (102a) with an outer thread (108a) and having an outer bolt (102b) with an inner thread (108b) adapted to engage the outer thread (108a), and with a threaded section (109) adapted to engage a threaded hole (155) in a connector body (149) at least partially forming a wire receiving chamber (153) extending essentially perpendicularly to a central axis (C) of the binding screw (1, 101), wherein the inner bolt (102a) is provided with at least one predefined inner breaking point (136a) and that the outer bolt (102b) is provided with at least one predefined outer breaking point (136b), **characterized in that** the outer breaking point (136b) is located in an inner gap (184b) dividing the inner thread (108b) into an upper inner thread portion (180b) and a lower inner thread portion (182b).

2. Assembly (47, 100) according to claim 1 **characterized in that** a distance (d_{108a, 116a}) between a lower end of the outer thread (108a) and a tip (116a) of the inner bolt (102a) measured essentially in parallel to the central axis (C) does not exceed a distance between an upper end of the inner thread (108b) and a lower end or rim (116b) of the outer bolt (102b) measured essentially in parallel to the central axis (C).

3. Assembly (47, 100) according to claim 1 or 2, **characterized in that** when a lower end of the threaded section (109) engages the threaded hole (155), a lower end (115) of the binding screw is located outside of the receiving chamber.

4. Assembly (47, 100) according to at least one of claims 1 to 3 **characterized in that** a stop (174a, 174b) for the inner bolt (102a) is formed at the outer bolt (102b).

5. Assembly (47, 100) according to claim 4, **characterized in that** the stop (174a, 174b) is formed at the inner thread (108b) and/or the outer thread (108a).

6. Assembly (47, 100) according to at least one of claims 1 to 5, **characterized in that** the inner thread (108b) and the outer thread (108a) have essentially the same length measured essentially in parallel to the central axis (C).

7. Assembly (47, 100) according to at least one of claims 1 to 6, **characterized in that** a first torque (M_{I}) between the inner thread (108b) and the outer thread (108a) is lower than a second torque (M_{II}) between the threaded section (109) and the threaded hole (155).

8. Assembly (47, 100) according to claims 1 to 7, **characterized in that** the outer breaking point (136b) is located in the vicinity of a lower end of the inner gap (184b).

9. Assembly (47, 100) according to claims 1 to 8, **characterized in that** the inner breaking point (136a) is located in an outer gap (184a) dividing the outer thread (108a) into an upper outer thread portion (180a) and a lower outer thread portion (182a).

10. Assembly (47, 100) according to claims 1 to 7 and 9, **characterized in that** a length (l_{184b}) of the inner gap (184b) measured essentially in parallel to the central axis (C) exceeds a length (l₁₈₄ₐ) of the outer gap (184a) measured essentially in parallel to the central axis (C).

11. Assembly (47, 100) according to claims 1 to 7 and 9 or 10, **characterized in that** a length (l₁₈₂ₐ) of the lower outer thread portion (182a) measured essentially in parallel to the central axis (C) exceeds a length (l_{182b}) of the lower inner thread portion (l_{182b}) measured essentially in parallel to the central axis (C).

12. Assembly (47, 100) according to at least one of claims 1 to 11, **characterized in that** the inner bolt (102a) and the outer bolt (102b) together at least partly form a contact section (117) of the binding screw (1, 101).

13. Assembly (47, 100) according to at least one of claims 1 to 12, **characterized in that** a tapered penetration portion (119) of the binding screw (1, 101) is at least partially formed by the inner bolt (102a) and/or the outer bolt (102b).

14. Assembly (47, 100) according to at least one of claims 1 to 13, **characterized in that** the inner bolt (102a) provides a first conical section (125) and the outer bolt (102b) provides a second conical section (127) of a penetration portion (119) of the binding screw (1, 101).

## Patentansprüche

1. Drahtverbindungsanordnung (47, 100) wie ein Kabelverbinder oder Kabelschuh, speziell zum Verbinden von elastischen Aluminiumdrähten, wobei die Anordnung (47, 100) eine Klemmschraube (1, 101) umfasst, die einen inneren Bolzen (102a) mit einem Außengewinde (108a) und einen äußeren Bolzen (102b) mit einem Innengewinde (108b) aufweist, ausgelegt zum Eingriff des Außengewindes (108a), und mit einem mit Gewinde versehenen Abschnitt (109), ausgelegt zum Eingriff mit einer Gewindebohrung (155) in einem Verbinderkern (149), der zumindest teilweise eine Drahtaufnahmekammer (153) bildet, die sich im Wesentlichen senkrecht zu einer Mittelachse (C) der Klemmschraube (1, 101) erstreckt, wobei der innere Bolzen (102a) mit mindestens einer vorbestimmten inneren Bruchgrenze (136a) versehen ist, und dass der äußere Bolzen (102b) mit mindestens einer vorbestimmten äußeren Bruchgrenze (136b) versehen ist,
**dadurch gekennzeichnet, dass**
die äußere Bruchgrenze (136b) sich in einem inneren Spalt (184b) befindet, der das Innengewinde (108b) in einen oberen Innengewindeabschnitt (180b) und einen unteren Innengewindeabschnitt (182b) teilt.

2. Anordnung (47, 100) nach Anspruch 1, **dadurch gekennzeichnet, dass** ein Abstand (d_{108a,116a}) zwischen einem unteren Ende des Außengewindes (108a) und einer Spitze (116a) des inneren Bolzens (102a), im Wesentlichen parallel zu der Mittelachse (C) gemessen, einen Abstand zwischen einem oberen Ende des Innengewindes (108b) und einem unteren Ende oder Umfangsrand (116b) des äußeren Bolzens (102b), im Wesentlichen parallel zu der Mittelachse (C) gemessen, nicht überschreitet.

3. Anordnung (47, 100) nach Anspruch 1 oder 2, **dadurch gekennzeichnet, dass** wenn ein unteres Ende des mit Gewinde versehenen Abschnitts (109) mit der Gewindebohrung (155) in Eingriff kommt, ein unteres Ende (115) der Klemmschraube sich außerhalb der Aufnahmekammer befindet.

4. Anordnung (47, 100) nach mindestens einem der Ansprüche 1 bis 3, **dadurch gekennzeichnet, dass** ein Anschlag (174a, 174b) für den inneren Bolzen (102a) an dem äußeren Bolzen (102b) ausgebildet ist.

5. Anordnung (47, 100) nach Anspruch 4, **dadurch gekennzeichnet, dass** der Anschlag (174a, 174b) an dem Innengewinde (108b) und/oder dem Außengewinde (108a) ausgebildet ist.

6. Anordnung (47, 100) nach mindestens einem der Ansprüche 1 bis 5, **dadurch gekennzeichnet, dass** das Innengewinde (108b) und das Außengewinde (108a) im Wesentlichen die gleiche Länge, im Wesentlichen parallel zu der Mittelachse (C) gemessen, besitzen.

7. Anordnung (47, 100) nach mindestens einem der Ansprüche 1 bis 6, **dadurch gekennzeichnet, dass** ein erstes Moment (M_{I}) zwischen dem Innengewinde (108b) und dem Außengewinde (108a) kleiner ist als ein zweites Moment (M_{II}) zwischen dem mit Gewinde versehenen Abschnitt (109) und der Gewindebohrung (155).

8. Anordnung (47, 100) nach den Ansprüchen 1 bis 7, **dadurch gekennzeichnet, dass** die äußere Bruchgrenze (136b) sich in der Nähe eines unteren Endes des inneren Spalts (184b) befindet.

9. Anordnung (47, 100) nach den Ansprüchen 1 bis 8, **dadurch gekennzeichnet, dass** die innere Bruchgrenze (136a) sich in einem äußeren Spalt (184a) befindet, der das Außengewinde (108a) in einen oberen Außengewindeabschnitt (180a) und einen unteren Außengewindeabschnitt (182a) teilt.

10. Anordnung (47, 100) nach den Ansprüchen 1 bis 7 und 9, **dadurch gekennzeichnet, dass** eine Länge (l_{184b}) des inneren Spalts (184b), im Wesentlichen parallel zu der Mittelachse (C) gemessen, sich in einer Länge (l₁₈₄ₐ) des äußeren Spalts (184a), im Wesentlichen parallel zu der Mittelachse (C) gemessen, erstreckt.

11. Anordnung (47, 100) nach den Ansprüchen 1 bis 7 und 9 oder 10, **dadurch gekennzeichnet, dass** eine Länge (l₁₈₂ₐ) des unteren Außengewindeabschnitts (182a), im Wesentlichen parallel zu der Mittelachse (C) gemessen, eine Länge (l_{182b}) des unteren Innengewindeabschnitts (l_{182b}), im Wesentlichen parallel zu der Mittelachse (C) gemessen, überschreitet.

12. Anordnung (47, 100) nach mindestens einem der Ansprüche 1 bis 11, **dadurch gekennzeichnet, dass** der innere Bolzen (102a) und der äußere Bolzen (102b) zusammen zumindest teilweise einen Kontaktabschnitt (117) der Klemmschraube (1, 101) bilden.

13. Anordnung (47, 100) nach mindestens einem der Ansprüche 1 bis 12, **dadurch gekennzeichnet, dass** ein abgeschrägter Durchdringungsteil (119) der Klemmschraube (1, 101) zumindest teilweise durch den inneren Bolzen (102a) und/oder den äußeren Bolzen (102b) gebildet ist.

14. Anordnung (47, 100) nach mindestens einem der Ansprüche 1 bis 13, **dadurch gekennzeichnet, dass** der innere Bolzen (102a) einen ersten konischen Abschnitt (125) bildet, und der äußere Bolzen (102b) einen zweiten konischen Abschnitt (127) eines Durchdringungsteils (119) der Klemmschraube (1, 101) bildet.

## Revendications

1. Assemblage de connexion de câble (47, 100), tel qu'un connecteur d'épissure ou ergot, particulièrement destiné à la connexion de câbles en aluminium flexibles, l'assemblage (47, 100) comprenant une vis de raccordement (1, 101) disposant d'un boulon intérieur (102a) doté d'un filetage extérieur (108a) et disposant d'un boulon extérieur (102b) doté d'un filetage intérieur (108b) adapté pour s'engager dans le filetage extérieur (108a), et avec une section filetée (109) adaptée pour s'engager dans un trou fileté (155) un corps de connecteur (149) constituant au moins partiellement une chambre de réception de câble (153) s'étendant essentiellement perpendiculairement à un axe central (C) de la vis de raccordement (1, 101), dans lequel le boulon intérieur (102a) est fourni avec au moins un point de rupture intérieur prédéfini (136a) et que le boulon extérieur (102b) est fourni avec au moins un point de rupture extérieur prédéfini (136b), **caractérisé en ce que** le point de rupture extérieur (136b) est situé dans une cavité intérieure (184b) divisant le filetage intérieur (108b) en une partie de filetage intérieure supérieure (180b) et une partie de filetage intérieure inférieure (182b).

2. Assemblage (47, 100) selon la revendication 1 **caractérisé en ce que** une distance (d_{108a, 116a}) entre une extrémité inférieure du filetage extérieur (108a) et une pointe (116a) du boulon intérieur (102a) mesurée essentiellement en parallèle à l'axe central (C) ne dépasse pas une distance entre une extrémité supérieure du filetage intérieur (108b) et une extrémité inférieure ou un rebord (116b) du boulon extérieur (102b) mesurée essentiellement en parallèle à l'axe central (C).

3. Assemblage (47, 100) selon la revendication 1 ou 2, **caractérisé en ce que** lorsqu'une extrémité inférieure de la section filetée (109) s'engage dans le trou fileté (155), une extrémité inférieure (115) de la vis de raccordement est située hors de la chambre de réception.

4. Assemblage (47, 100) selon au moins une des revendications 1 à 3 **caractérisé en ce que** un arrêt (174a, 174b) pour le boulon intérieur (102a) est formé sur le boulon extérieur (102b).

5. Assemblage (47, 100) selon la revendication 4, **caractérisé en ce que** l'arrêt (174a, 174b) est formé sur le filetage intérieur (108b) et/ou le filetage extérieur (108a).

6. Assemblage (47, 100) selon au moins une des revendications 1 à 5, **caractérisé en ce que** le filetage intérieur (108b) et le filetage extérieur (108a) ont essentiellement la même longueur mesurée essentiellement en parallèle à l'axe central (C).

7. Assemblage (47, 100) selon au moins un des revendications 1 à 6, **caractérisé en ce que** un premier couple (M_{I}) entre le filetage intérieur (108b) et le filetage extérieur (108a) est inférieur à un deuxième couple (M_{II}) entre la section filetée (109) et le trou fileté (155).

8. Assemblage (47, 100) selon les revendications 1 à 7, **caractérisé en ce que** le point de rupture extérieur (136b) est situé à proximité d'une extrémité inférieure de la cavité intérieure (184b).

9. Assemblage (47, 100) selon les revendications 1 à 8, **caractérisé en ce que** le point de rupture intérieur (136a) est situé dans une cavité extérieure (184a) divisant le filetage extérieur (108a) en une partie de filetage extérieure supérieure (180a) et une partie de filetage extérieure inférieure (182a).

10. Assemblage (47, 100) selon les revendications 1 à 7 et 9, **caractérisé en ce que** une longueur (l_{184b}) de la cavité intérieure (184b) mesurée essentiellement en parallèle à l'axe central (C) dépasse une longueur (l₁₈₄ₐ) de la cavité extérieure (184a) mesurée essentiellement en parallèle à l'axe central (C).

11. Assemblage (47, 100) selon les revendications 1 à 7 et 9 ou 10, **caractérisé en ce que** une longueur (l₁₈₂ₐ) de la partie de filetage extérieure inférieure (182a) mesurée essentiellement en parallèle à l'axe central (C) dépasse une longueur (l_{182b}) de la partie de filetage intérieure inférieure (182b) mesurée essentiellement en parallèle à l'axe central (C).

12. Assemblage (47, 100) selon au moins une des revendications 1 à 11, **caractérisé en ce que** le boulon intérieur (102a) et le boulon extérieur (102b) ensemble au moins partiellement forment une section de contact (117) de la vis de raccordement (1, 101).

13. Assemblage (47, 100) selon au moins une des revendications 1 à 12, **caractérisé en ce que** une partie de pénétration conique (119) de la vis de raccordement (1, 101) est au moins partiellement formée par le boulon intérieur (102a) et/ou le boulon extérieur (102b).

14. Assemblage (47, 100) selon au moins une des revendications 1 à 13, **caractérisé en ce que** le boulon intérieur (102a) fournit une première section conique (125) et le boulon extérieur (102b) fournit une deuxième section conique (127) d'une partie de pénétration (119) de la vis de raccordement (1, 101).
